# EUROPÄISCHE PATENTANMELDUNG

(11) **EP 0 565 857 A1**
(43) Veröffentlichungstag der Anmeldung: **20.10.1993**
(21) Anmeldenummer: 93103707.1
(22) Anmeldetag: 09.03.1993
(51) Int. Cl.: B01D 33/25, B01D 33/46, B01D 33/66, B01D 33/76

(54) **Flüssigkeitsdruckfilter**

(30) Priorität: 13.03.1992 DE 9203382 U; 28.05.1992 DE 4217666; 10.02.1993 DE 4303847
(71) Anmelder: MASCHINENFABRIK KARL BRIEDEN GmbH & Co., D-44879 Bochum (DE)
(72) Erfinder: Kühme, Ernst, Dipl.Ing., D-4630 Bochum 1 (DE)
(74) Vertreter: Herrmann-Trentepohl, Werner, Dipl.-Ing.

(57) **Zusammenfassung**

Bei einem Druckfilter (1) mit einem Druckbehälter (2), in dem mehrere um vorzugsweise gleiche Bogenwinkel gegeneinander versetzt angeordnete Filter (1 bis 12) um eine Horizontalachse des liegend angeordneten Druckbehälters (2) rotieren und hierbei kontinuierlich in und aus einer Feststoffsuspension (8) ein- und austauchen sowie oberhalb des Feststoffsuspensionsspiegels im Druckraum des Behälters (2) in einer Abblasstation von dem von außen nach innen getrockneten Filterkuchen befreit werden, wobei der abgeblasene Filterkuchen über einen Filterkuchenförderer (12) aus einer Druckschleuse (51) ausgetragen und das Filtrat aus den Filterelementen abgeführt wird, ist die Erfindung dadurch gekennzeichnet, daß jeder Filter (I bis XII) ein Filterelement bildet, dessen Filterfläche (72, 73; 81, 82) im wesentlichen von radial zur Kreisbahn verlaufenden Querschnittsseiten (32, 33, 68, 69) und parallel zur Drehachse (31) verlaufenden Längsseiten begrenzt ist, wobei die Filterelemente (I bis XII) drehfest auf der Drehscheibe (4) befestigt sind.

## Beschreibung

Die Erfindung betrifft ein Druckfilter gemäß dem Oberbegriff des Anspruches 1.

Insbesondere bezieht sich die Erfindung auf ein Flüssigkeitsdruckfilter, das unter anderem für technische Flüssigkeiten zur Abtrennung einer festen Phase von der Feststoffsuspension verwendet wird. Dabei kann es sich um die Aufbereitung von Prozeßwasser mit dem Ziel der Wasserreinigung handeln. Die insbesondere in diesen Fällen erforderliche hohe Durchsatzleistung beruht bei dem erfindungsgemäßen Druckfilter im wesentlichen auf dem im Druckbehälter aufrechterhaltenen Überdruck, der das Druckgefälle in den Filtern erhöht. Dadurch wächst der von der festen Phase der Feststoffsuspension gebildete Filterkuchen im Filtermedium stark an, sobald der betreffende Filter von außen nach innen durchströmt wird.

Die vergleichsweise hohe Durchsatzleistung solcher Flüssigkeitsfilter beruht auf der kontinuierlichen Filtration. Es ergibt sich daraus, daß die schrittweise während der Rotation längs einer Kreisbahn in Druckbehälter bewegten Filterelemente einzeln in der Abblasstation von dem auf ihrem Filtermedium haftenden Filterkuchen befreit werden, während die anderen Filterelemente die Filtration fortsetzen oder auf die Filtration vorbereitet werden. Ein anderer Vorteil derartiger Flüssigkeitsdruckfilter besteht darin, daß der Filterkuchen vergleichsweise trocken anfällt, weil nach dem Austauchen der Filterelemente der Trocknungsprozeß einsetzt und bis zum Abwerfen des Filterkuchens andauert. Das erleichtert die weitere Behandlung des Filterkuchens wesentlich. Deshalb sind derartige Filter auch für stark verschmutzte Flüssigkeiten mit schwer entwässerbarem Filterkuchen geeignet.

Diese und andere Vorteile des erfindungsgemäßen Druckfilters lassen sich mit einer Steuerung erreichen, welche den Ablauf der Filtration regelt, die sich aus der Arbeitsweise des Druckfilters ergeben. Die schrittweise schaltbare Drehbewegung der Filterelemente läßt diese einzeln in die Feststoffsuspension eintauchen und sich durch die zu filtrierende Flüssigkeit bewegen, bis sie schließlich wieder auftauchen und in die trockene Sphäre über dem Flüssigkeitsspiegel gelangen. Hierbei bleibt das Druckgefälle in den Filtern erhalten und drückt auf diese Weise weiter Flüssigkeit als Filtrat aus dem Filterkuchen und wird aus den Filtern abgeführt. Die Entfernung des schließlich getrockneten Filterkuchens von der Oberfläche des Filtermediums jeder Filterkerze erfolgt durch einen Luftstoß, der das Druckgefälle im Filter umkehrt und dadurch den Filterkuchen abwirft. Dieser gelangt auf einen Filterkuchenförderer, der z.B. als Kettenförderer ausgebildet ist und wird durch eine Druckschleuse ausgetragen, so daß der Arbeitsdruck im Druckfilter nicht abgesenkt zu werden braucht.

Druckfilter dieser Art sind an sich bekannt und wurden bislang für die Filtration von Kohleschlämmen eingesetzt (Zeitschrift "Aufbereitungstechnik" 27, 1986, SS. 387/395). Hierbei bestehen die Filter jeweils aus einer Vielzahl von scheibenförmigen Filterelementen, die auf einer gemeinsamen Achse angeordnet sind, um die sich die Filterelemente gemeinsam und gegensinnig zur Rotationsbewegung des Filters im Druckgehäuse drehen.

Obwohl der mechanische Aufwand für derartige Druckfilter vergleichsweise hoch ist, läßt sich trotz der Scheibenform der Filterelemente die Filterfläche insgesamt nicht beliebig vergrößern. Einerseits gibt nämlich die vom Einzelfall abhängige Dicke des Filterkuchens auf dem in die Abblasstation gelangenden Filter den axialen Abstand der Filterelemente vor, der in der Abblasstation noch hinreichend groß sein muß, um ein erfolgreiches Abblasen zu gewährleisten. Andererseits kann aber der Scheibendurchmesser nicht beliebig vergrößert werden, weil hiervon die Anzahl der im Druckgehäuse unterzubringenden Filter und damit die Anzahl der Filtrationsvorgänge während eines Umlaufes der Filter abhängt. Ganz allgemein ergibt sich aus der Scheibenform der Filter die Schwierigkeit, den Filterkuchen restlos abzusprengen, da die Zwischenräume zwischen den Filterelementen naturgemäß möglichst klein gewählt werden müssen.

Die Erfindung geht demgegenüber einen anderen Weg, dessen Grundgedanke im Anspruch 1 wiedergegeben ist. Weitere Merkmale der Erfindung ergeben sich aus den Unteransprüchen.

Gemäß der Erfindung sind die Filterflächen der Filterelemente achsparallel angeordnet. Die achsparallele Anordnung der Filterflächen macht deren Größe von ihrem radialen Abstand von der Filterachse unabhängig. Dadurch läßt sich die Anzahl der rotierenden Filter und damit die Anzahl der Filtervorgänge während eines Umlaufes der Filter im Druckbehälter steigern und auf diese Weise bei gegebenen Durchmesser des Druckbehälters eine optimale Größe der Filterfläche erzielen. Da der radiale Durchmesser der Filter auf diese Weise abnimmt, benötigt die Erfindung zur restlosen Beaufschlagung der Filterfläche mit dem Filterkuchen die Bewegung der Filterelemente um ihre eigene Achse nicht mehr. Deswegen sind die Filterelemente gemäß der Erfindung drehfest gelagert. Das führt zu einer wesentlichen Vereinfachung der Mechanik und der Steuerung eines derartigen Druckfilters.

Ein wesentlicher Vorteil des erfindungsgemäßen Druckfilters besteht auch darin, daß, anders als in den Scheibenfiltern, die Filterflächen der Filterelemente nach ihrem Austauchen aus der Feststoffsuspension jedenfalls zum Teil statt wie bekannt senkrecht, mehr oder weniger horizontal stehen und sich erst in der Abblasstation durch den Umlauf in die senkrechte oder in eine mehr oder weniger dieser angenäherte Neigung drehen. Hierdurch wird dem Abfallen des Filterkuchens vor der Abblasstation entgegengewirkt, was je nach den stofflichen Vorgaben der Feststoffsuspensionen dazu führen kann, daß erhebliche Teile des Filterkuchens in die Feststoffsuspension zurückfallen, bevor der betreffende Filter die Abblasstation erreicht hat.

Das erfindungsgemäße Druckfilter eignet sich daher nicht nur zur Gewinnung eines weiterverwendbaren Filtrats, sondern auch für Filtrationsaufgaben, die darauf abzielen, den Filterkuchen noch vor der Abblasstation zu bearbeiten. Ein Beispiel hierfür ist die Gewinnung des Restzuckers aus dem Karbonatschlamm der Zuckerherstellung. Durch den Einsatz eines erfindungsgemäßen Druckfilters ist es möglich, den Restzucker aus dem als Filterkuchen auf den Filtern abgesetzten Karbonatschlamm durch eine Sprühwaschung zu extrahieren und mit dem Filtrat abzuführen.

Als zweckmäßig hat sich die Ausführungsform nach Anspruch 2 erwiesen. Da hierbei der feste Teil des Filterelementes infolge seiner Kastenform eine hohe Formsteifigkeit aufweist, kann er auf einfache Weise zur drehfesten Lagerung des Filters auf einer Drehscheibe benutzt werden, die mit ihrer Ebene wegen der liegenden Anordnung des Druckbehälters annähernd senkrecht steht. Gleichzeitig werden hierdurch axiale Mantelflächen geschaffen, auf denen die Filtration mit dem teilweise aufliegenden Filtertuch stattfindet. Diese Mantelflächen sind daher durchbrochen, um das Filtrat in das Innere des Kastens zu führen, aus dem es abgeführt wird. Wenn ein solches Filterelement in die Abblasstation gelangt, kann darüber hinaus die Befestigung des Filtermediums so gewählt werden, daß es teilweise von den Mantelflächen des Kastens abhebt und durch diese Deformation das Ablösen des Filterkuchens erleichtert.

Die Filterelemente bedürfen im Betrieb insbesondere bei anspruchsvoller Filtration der laufenden Überwachung und Reparatur unvermeidliche Schäden, die sich insbesondere an dem Filtermedium zeigen. Während bei bekannten Druckfiltern infolge ihres eingangs geschilderten Aufbaus solche Arbeiten nur während längerer Unterbrechungen der Filtration möglich sind, führt die erfindungsgemäße Anordnung der Filterflächen und die drehfeste Lagerung der Filterelemente dazu, daß derartige Reparaturarbeiten in sehr kurzer Zeit ausgeführt werden können. Hierfür sind die im Anspruch 3 wiedergegebenen Merkmale vorgesehen. Die Anordnung ist dabei so getroffen, daß nach dem Lösen der Muttern bzw. der Stehbolzen das gesamte Filterelement einschließlich seines Rohrstutzens abgezogen und auf umgekehrtem Wege wieder montiert werden kann. Auf diese Weise lassen sich z. B. Filtertücher, die vor allem als Filtermedium in Betracht kommen, auf einfache Weise auswechseln.

Dieses Auswechseln des Filtermediums bzw. Neubelegens der Filterelemente wird ebenfalls durch die Erfindung gegenüber den bekannten Druckfiltern erleichtert. Während die bekannte Scheibenform der Filterelemente ein entsprechend konfektioniertes Filtermedium, insbesondere Filtertuch erforderlich macht, kann man in dem erfindungsgemäßen Druckfilter die jeweils für eine Belegung eines Filterelementes erforderliche Länge aus einem Filtermediumvorrat abschneiden und damit die axialen Filterflächen der Filter belegen.

Dem vorzeitigen Abfallen des Filterkuchens von den Filterflächen vor der Abblasstation läßt sich durch spezielle Maßnahmen gemäß der Erfindung entgegenwirken. Eine mögliche Ausführungsform solcher Druckfilter ergibt sich aus dem Anspruch 4. Danach liegen die Filterflächen der beiden Hohlkörper, die paarweise ein Filterelement bilden, beim Austauchen des Filterelementes aus der Feststoffsuspension im wesentlichen horizontal und drehen sich ohne mechanischen Aufwand im einzelnen lediglich durch die Umlaufbewegung in der Abblasstation in die annähernd Senkrechte. Dadurch kann der Filterkuchen eine erhebliche Dicke auf den Filterflächen erreichen, ohne daß es zu Verlusten beim Feststoff während der Umlaufbewegung und insbesondere beim Auftauchen der Filterelemente kommt. Hierbei gelingt es nämlich, für jeden der beiden Hohlkörper beim Austauchen des Filterelementes aus der Feststoffsuspension eine annähernd horizontale Filterfläche zu schaffen.

Mit den Merkmalen des Anspruches 5 wird eine andere, zweckmäßige Form der Filterelemente vorgeschlagen. Hierbei ist die Umrißlinie des Querschnittes der Filterelemente derart geändert, daß sie von dem Kreisquerschnitt abweicht. Gleichzeitig werden die Filterelemente so orientiert, daß die Umrißlinie ihres Querschnittes in Richtung auf den Mittelpunkt der Rotationsbewegung der Filter im Druckbehälter konvergiert; sobald die Filterelemente austauchen, läuft daher das Filtrat nach unten in den jeweiligen Filtratabzug. Da außerdem der Filtratablauf exzentrisch in Richtung des Drehmittelpunktes angeordnet ist, wird praktisch für den gesamten Filterkuchen ein Gefälle geschaffen, das die Flüssigkeit in dem Filterelemente in Richtung auf das Tiefste des Filterelementquerschnittes und damit in den Ablauf führt, sobald die Filterelemente oberhalb des Flüssigkeitsspiegels im Druckbehälter stehen. Dadurch läßt sich das in diesen Filterkerzen befindliche Filtrat praktisch vollständig ausdrücken, wodurch die Filterleistung und die Trocknung des Filterkuchens begünstigt wird.

Es hat sich übrigens überraschend herausgestellt, daß der Übergang von der bekannten Scheibenform der Filterfläche auf die erfindungsgemäße hohlprismatische Ausbildung die Filterfläche nicht, jedenfalls aber nicht entscheidend vermindert. Das liegt u.a. an der Möglichkeit, eine vergleichsweise dichtere Anordnung der Filterelemente auf einem Teilkreis um den Drehmittelpunkt anzuordnen und dadurch die Anzahl der Filterelemente zu vergrößern. Auch entfallen die eingangs geschilderten, durch die Zwickelausbildung der Scheibenfilter bedingten Schwierigkeiten beim restlosen Entfernen des Filterkuchens.

Vorzugsweise verwirklicht man die Erfindung deswegen auch mit den Merkmalen des Anspruches 5. Die sich hieraus ergebenden näherungsweise Kreisausschnittsform des Filterelementquerschnittes erlaubt eine optimale dichte Anordnung der Filter auf dem gewählten Teilkreis um den Drehmittelpunkt des Drehtellers und gewährleistet außerdem durch die Anordnung des Filtratabzuges eine vollständige Abführung des Filtrates aus den Filterelementen.

Mit den Merkmalen des Anspruches 5 wird die Querschnittsform der Filterkerzen weiter konkretisiert. Die darin vorgesehene, dachförmige Schräge wirkt sich günstig auf den Abzug des Filtrates aus der Filterkerze aus, weil sie das Ablaufen der Flüssigkeit begünstigt. Die in diesem Anspruch beschriebene Alternative hat dagegen den Vorteil einer Vereinfachung der Formgebung und durch die geometrisch als Sekante an einen Teilkreis um den Drehmittelpunkt erscheinende Gerade des Filterelementquerschnittes den Vorteil, daß in radialer Richtung das Druckgehäuse verkleinert werden kann.

Die Filterleistung des erfindungsgemäßen Druckfilters läßt sich unter Umständen wesentlich steigern, wenn das Filtermedium nach dem Abblasen des Filterkuchens in geeigneter Weise auf den folgenden Filtrationszyklus vorbereitet werden kann. Diesem Zweck dienen die Merkmale der Ansprüche 6 und 7. Das hierbei auf die Oberfläche des Filtermediums aufgebrachte Spülmedium läßt sich den Bedürfnissen des Einzelfalls entsprechend wählen. Im allgemeinen geht es zunächst darum, das Filtermedium von anhaftenden Resten des Filterkuchens zu befreien. In diesen Fällen wird man vorzugsweise eine Druckflüssigkeit verwenden, mit der man die Filtermediumoberfläche behandelt, indem man während eines Stillstandes der Rotationsbewegung der Filter einmal oder mehrfach die axiale Länge des Filterkuchens abfährt und dabei eine Hochdruckwaschung durchführt.

Nach dem vorstehend erläuterten Waschen des Filtermediums kann man außerdem ein sogenanntes pre-coating ermöglichen. Hierdurch wird mit Hilfe einer mit den in den Ansprüchen 6 und 7 beschriebenen Baugruppen ausgebrachten Flüssigkeit das Haftvermögen des Filterkuchens bzw. der darin enthaltenen besonderen Bestandteile des Feststoffes auf dem Filtermedium soweit herabgesetzt, daß im Ergebnis die Filter beim Wiedereintauchen in die Flüssigkeit vollständig abgereinigt sind. Für das pre-coating kommen vorzugsweise Wasser zugesetzte Stoffe und Verbindungen in Betracht, die den besonders hartnäckigen Filterkuchenbestandteilen entsprechend angepaßt sind. Sie machen das Filtermedium hiergegen abstoßend. Bewährt haben sich in diesem Zusammenhang Kieselgur, Braunkohlenstaub oder dergleichen.

Die durch die Erfindung ermöglichte Vermehrung der Filterelemente und die durch die Form und Anordnung der Filterflächen im Druckfilter erreichte Optimierung gestattet auch als weitere Vorbereitung der Filter auf einen Filtrationszyklus eine Vorformatierung des Filtermediums, bevor das Filtrat abgezogen wird mit dem Ziel, eine bestimmte Filterkuchendicke aufzubauen. Dies erfolgt nach dem Eintauchen der Filterelemente in die Feststoffsuspension. Dabei wird unter Beobachtung oder Messung der Trübung des Filtrates ein Vorfiltrat gesondert abgeführt, bis die Filtratreinheit befriedigt. Diese Maßnahmen der Erfindung sind für Einsatzfälle bestimmt, bei denen besondere Anforderungen an die Reinheit des Filtrates gestellt werden.

Die Einzelheiten, weiteren Merkmale und andere Vorteile der Erfindung ergeben sich aus der nachfolgenden Beschreibung von Ausführungsformen anhand der Figuren in der Zeichnung; es zeigen
- Fig. 1: einen schematisierten Querschnitt durch ein Druckfilter gemäß einer ersten Ausführungsform,
- Fig. 2: einen Schnitt längs der Linie Fig. II-II der Fig. 1 und
- Fig. 3: in der Fig. 1 entsprechender Darstellung eine weitere Ausführungsform eines Druckfilters,
- Fig. 4: ein Filterelement in mehreren Darstellungen,
- Fig. 5: eine Einzelheit des Druckfilters nach Fig. 1 in mehreren Darstellungen,
- Fig. 6: den Gegenstand der Fig. 1 in Draufsicht und
- Fig. 7: rechts einen Schnitt längs der Linie VII der Fig. 1 und links eine Stirnansicht des rechts dargestellten Gegenstandes.

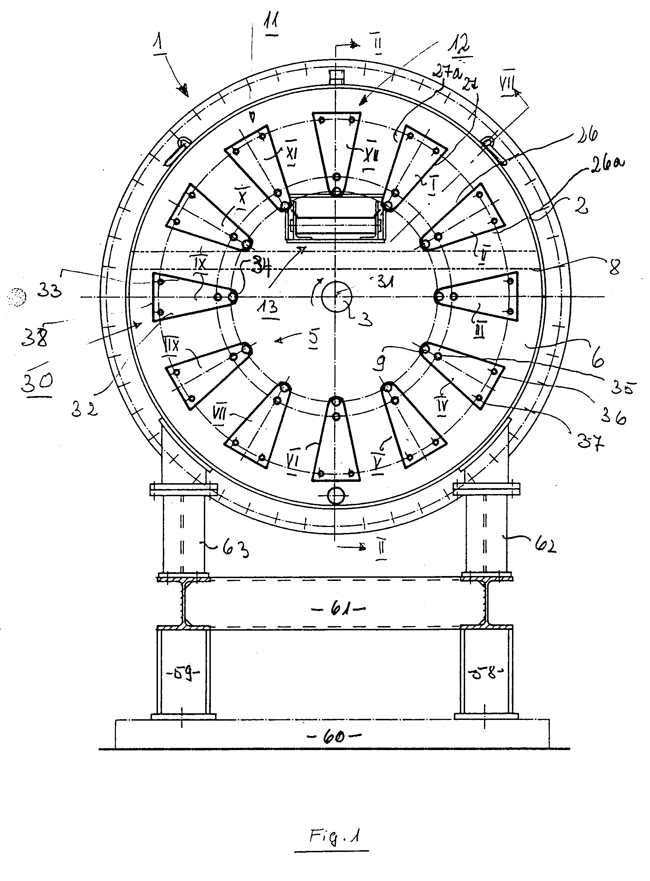

Das allgemein mit 1 in Fig. 1 bezeichnete Druckfilter ist gemäß dem dargestellten Ausführungsbeispiel für die Abtrennung eines Feststoffes aus einer Feststoffsuspension vorgesehen, die von einer zu filtrierenden Flüssigkeit gebildet wird. Das Filtrat ist Prozeßwasser.

In dem hohlzylindrischen liegend angeordneten Druckbehälter 2 ist auf einer in Richtung des Pfeiles der Fig. 1 umlaufenden Welle 3 eine Drehscheibe 4 drehfest angebracht. Die Welle ist schrittweise schaltbar, gemäß dem Ausführungsbeispiel jeweils um 30°. Auf Teilkreisen um den Mittelpunkt 31 der Welle 3 sind auf der Drehscheibe 4 in regelmäßigen Abständen, d.h. um 30° versetzt die in Fig. 1 mit den Ordnungszahlen I bis XII bezeichneten hohlprismatischen Filterelemente 5 befestigt. Das Innere 6 des Druckbehälters 2 steht unter Überdruck. Der Überdruck beträgt beispielsweise ca. 4 bar. Im unteren Teil des Druckbehälters befindet sich die Suspension. Ihr Flüssigkeitsspiegel 8 wird in einer vorgegebenen Höhe im Druckbehälter gehalten. Durch die schrittweise Drehung der Welle 3 gelangen die Filter 1 bis 12 im Uhrzeigersinn nacheinander in die Feststoffsuspension 7 und tauchen aus dieser wieder auf. Oberhalb des Spiegels 8 stehen im Ausführungsbeispiel die Filter mit den Ordnungszahlen X bis II. Die restlichen Filter sind in die Suspension eingetaucht. Jeder Filter enthält ein axiales Abzugsrohr 9, mit dem das Filtrat aus dem Inneren des Filterelementes abgeführt wird.

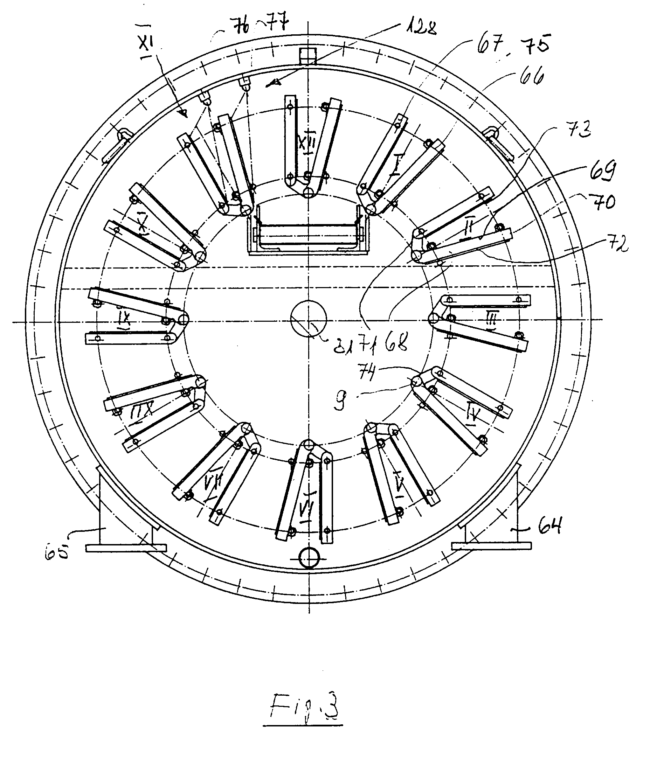

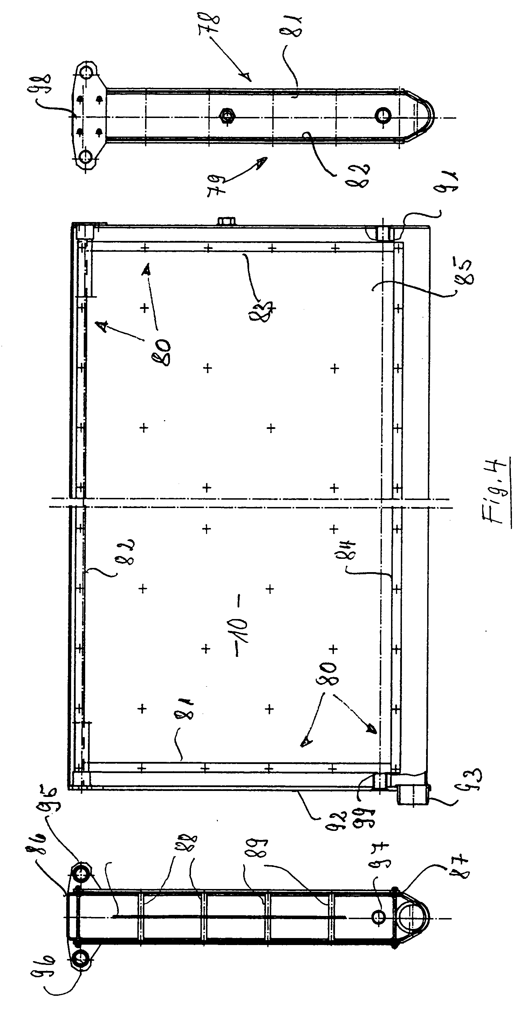

In dem in den Fig. 1 und 3 dargestellten Betriebszustand wird fortlaufend Filtrat aus den Filterkerzen mit den Ordnungszahlen III bis IX abgeführt. Das Filterelement mit der Ordnungszahl X ist aus der Suspension ausgetaucht. In ihm wird der Abzug des Filtrats fortgesetzt, wodurch der Filterkuchen auf dem Filtermedium 10 (Fig. 4) getrocknet wird. Dieser Trocknungsvorgang wird in der folgenden Station 11, in der sich das Filter mit der Ordnungszahl XI befindet, fortgesetzt. In der darauffolgenden Abblasstation 12, in der sich das Filter XII befindet, wird der Filterkuchen vom Filtermedium abgesprengt. Dazu dient im Inneren des Filters XII ein von außen erzeugter pneumatischer Überdruck, durch den der Filterkuchen abgeblasen und auf ein darunter befindliches Förderband 13 ausgetragen wird. Das Förderband 13 des Filterkuchenförderers führt den Filterkuchen aus dem Innenraum des Druckbehälters durch eine Druckschleuse mit Drehklappen 52 und 53 ab.

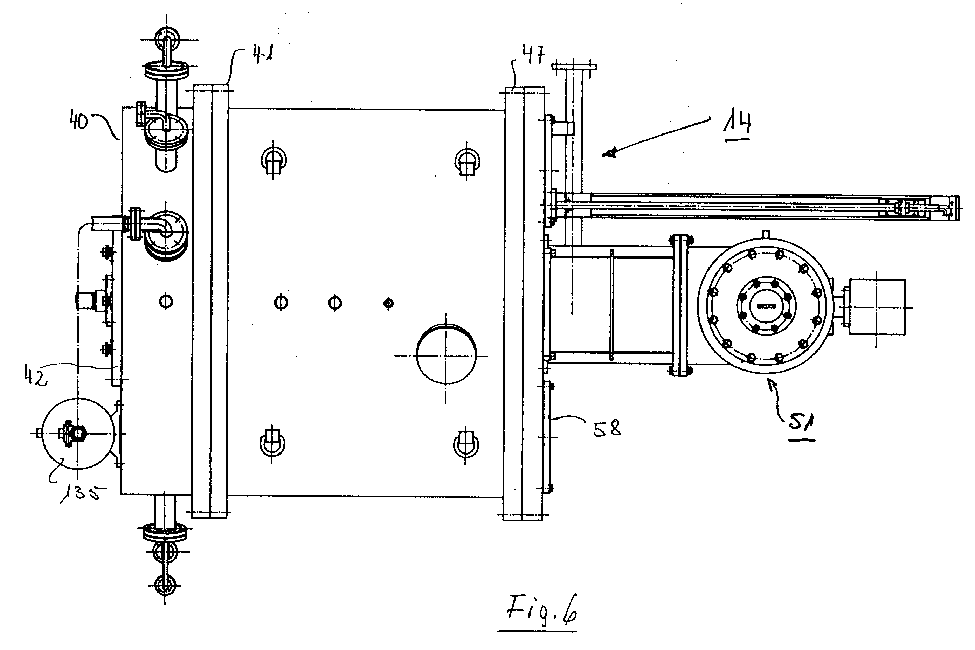

In dem Abschnitt oberhalb des Feststoffsuspensionsspiegels 8 ist im Druckgehäuse 2 in Drehrichtung nach der Filterkuchenabblasstation eine Hochdruckreinigungsstation 14 (Fig. 6) eingerichtet, in der beispielsweise mit Filtrat das Filtermedium bearbeitet und dadurch von Filterkuchenresten gereinigt wird. Die Anordnung ist dabei so getroffen, daß die Einwirkung des Spülmediums zwischen zwei benachbarten Filterelementen jeweils auf die nachlaufende Seite 26 des vorlaufenden Filterelementes II und auf die vorlaufende Seite 27 des nachlaufenden Filters I erfolgt. Dadurch werden beide Seiten 26 und 26a bzw. 27 und 27a aller Filterelemente während zweier aufeinanderfolgender Teildrehungen der Drehscheibe 4 einer Hochdruckwäsche unterzogen.

Gemäß dem dargestellten Ausführungsbeispiel sitzt um einen der Taktfolge der Drehscheibe entsprechendem Bogenwinkel versetzt zwischen dem Filter II und dem Filter I, also hinter der Abblasstation 12 für diesen Vorgang eine axial bewegliche Hochdruckspüllanze 15 mit einem axialen Antrieb 16. Die in den Druckraum des Filtergehäuses 2 gerichtete Stirnseite des Lanzenrohres, das mit einer Dichtung 17 durch die Rückwand 18 des Druckbehälters 2 geführt ist, trägt einen Düsenkopf 16, der auf die benachbarten Filterflächen der Filterelemente I und II gerichtet ist. Eine Hülse 20 ist in einer dem Umriß der Hülse entsprechenden Aussparung in einem Gehäusedeckel 19 des Behälters 2 untergebracht. Durch sie ist die Lanze nach außen geführt. Das außenliegende Lanzenende sitzt in der Hülse 16, die mit ihrem Boden 21 mit einem doppelt wirkenden Antriebszylinder 22 verbunden ist. Dieser weist einen zur Vermeidung einer besonderen Hydraulik und zur Ausnutzung der ohnehin erforderlichen Pneumatik vorzugszweise pneumatisch angetriebenen Kolben auf und sitzt auf einer mit dem Deckel 18 verbundenen Konsole 24. Die Lanze wird in Abhängigkeit von der Taktfolge der Drehscheibe in den Zwischenraum zwischen zwei benachbarten Filtern - im Ausführungsbeispiel mit den Ordnungszahlen I und II - geführt, so daß die Einwirkung der aus der Flachstrahldüse 14 austretenden Flüssigkeit auf das Filtermedium gewährleistet ist. Wenn der Antrieb die Lanze zurückgezogen hat, wird die Weiterdrehung der Drehscheibe 4 und der darauf sitzenden Filter I bis XII ausgelöst.

Durch die gleiche Lanze kann auch eine pre-coating-Flüssigkeit geführt werden (z. B. mit Wasser versetzter Braunkohlenstaub).

Die Filter I bis XII bilden jeweils ein Filterelement. Sie lassen sich in der besonderen Form mit den Ordnungszahlen I bis XII in der aus Fig. 1 ersichtlichen, langgestreckten hohlen Form verwirklichen. Hierbei ist der Filterquerschnitt der wirksamen Filterfläche in allen Querschnitten gleich und mit einer Umrißlinie 30 versehen, die in Richtung des Drehmittelpunktes 31 der Drehscheibe 4 konvergierende Wegstrecken aufweist, die mit 32 und 33 in Fig. 1 gekennzeichnet sind. Der Flüssigkeitsablauf aus dem Filter mit Hilfe des Rohres 9 befindet sich unter dem Scheitel der konvergierenden Umrißlinien 32, 33. Da die Filter I bis XII auf der Drehscheibe 4 so angeordnet sind, daß die Scheitel ihrer Umrißteilstrecken 32, 33 innen, d.h. auf Radien des Drehmittelpunktes 31 liegen, läuft das Filtrat innerhalb der ausgetauchten Filter - im Ausführungsbeispiel der Filter mit den Ordnungszahlen X bis II - mit Gefälle dem Abzugsrohr 9 zu. Im Scheitel des Querschnittes sind die Teilstrecken 32, 33 mit einer gekrümmten, d.h. bogenförmigen Umrißlinie einer Teilstrecke 34 verbunden. Auf der gegenüberliegenden Seite sind die konvergierenden Umrißteilstrecken 32, 33 geradlinig bei 38. Sie können auch mit einer dachförmigen, doppelten Schräge in Art eines Walmdaches verbunden sein. Daraus ergibt sich die Möglichkeit, die Filter optimal auf der Drehscheibe 4 zu befestigen. Das geschieht mit drei Stehbolzen 35 bis 37. Zwei der drei Stehbolzen mit den Ordnungszahlen 36 und 37 befinden sich dann unter den Schrägen. Der dritte Stehbolzen ist neben dem Abzugsrohr 9 im Inneren des Filters angeordnet.

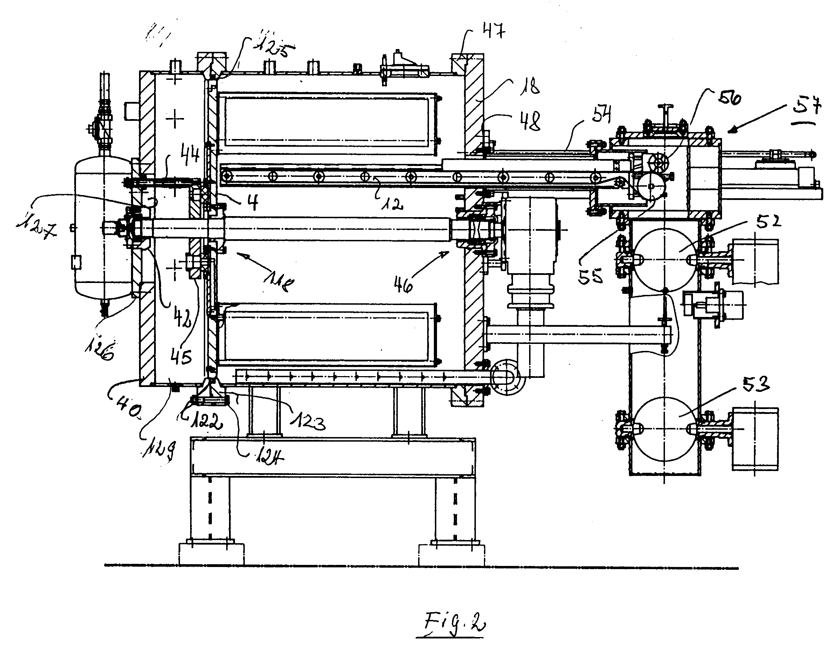

Der zylindrische Druckbehälter 2 weist an seiner Stirnseite einen Deckel 40 auf. Dieser ist mit einem Flansch 41 verschraubt, wobei die Schrauben auf einem Teilkreis um die Welle 3 der Drehscheibe 4 angeordnet sind. Auf einem weiteren, inneren Teilkreis sitzt die Verschraubung eines konzentrisch inneren Deckels 2 (Fig. 2), welcher das Endlager 42 der Welle 3 und Stehbolzen 44 enthält, die eine drehfeste Steuerscheibe 45 halten und in der die Welle 3 läuft. Das freie Wellenende ist in seiner Lagerhülse 46 gelagert, die drehfest an der Innenseite des Behälterbodens 18 befestigt ist. Dieser ist mit einem Flansch 47 des zylindrischen Druckbehältermantels verschraubt. Ferner befinden sich im Druckbehälter 18 Öffnungen. Die Öffnung 48 dient der Abführung des Filterkuchens aus dem Druckbehälter 2.

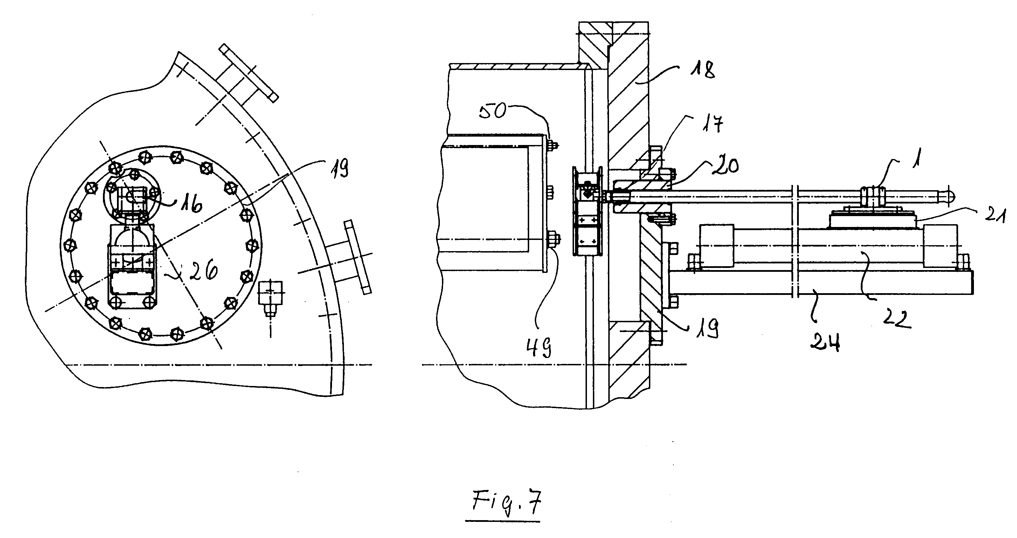

Durch eine weitere Öffnung im Druckbehälterboden, die mit einem verschraubbaren Deckel 58 normalerweise verschlossen ist (Fig. 6) können die dem Boden zugeordneten Muttern 49 und 50 (Fig. 7) der Stehbolzen gelöst und die Filter vom Drehteller 4 abgezogen werden. Dadurch ist eine einfache Montage und Demontage der Filterelemente möglich.

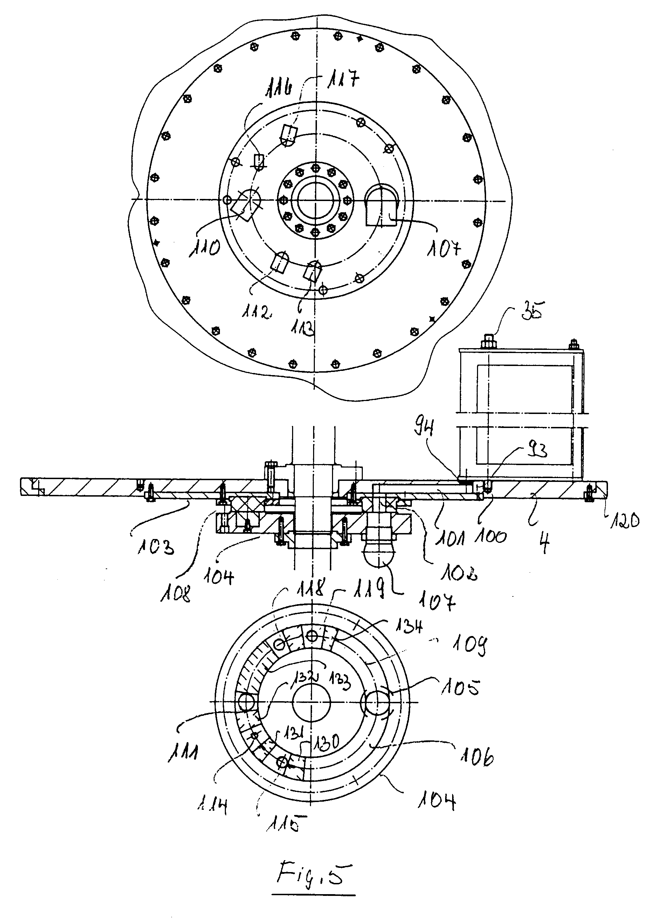

Die Drehscheibe 4 ist auf ihrem Umfang mit einem auswechselbaren, gemäß der mittleren Darstellung der Fig. 5 verschraubten Schleißring 120 versehen, welcher sich auf einer Ringfläche 121 des Deckelflansches 122 und des Gehäuseflansches 123 des Druckbehälters dreht. Durch Lösen der Verschraubung 124 des angeflanschten Deckels 40 (Fig. 2) können die Flansche gelöst und daher die liegende Dichtung 125 freigelegt werden, die auch ein Verschleißteil darstellt.

Die Welle 3 läßt sich ebenfalls zu Reparatur- und Montagezwecken von der mit dem Deckel 40 verschlossenen Behälterseite aus montieren und demontieren, wenn der Deckel 40 entfernt worden ist. Die im Deckel 40 vorgesehene und mit einer verschraubten Scheibe 121 verschließbare Öffnung 127 ist im Durchmesser so groß gewählt, daß die Steuerscheibe 45 mit dem Deckel 126 über ihre Stehbolzenbefestigung 44 mit dem Wellenlager 46 in der Scheibe 126 nach außen abgezogen werden kann.

Der zum Abzug des Filterkuchens dienende Förderer 12 ist zwischen dem Druckbehälter 2 und einer Druckluftschleuse 51 mit den wechselseitig betätigten Absperrorganen 52 und 53 in einem Gehäuse 54 druckdicht gekapselt. Hierdurch wird der Druckluftverbrauch insgesamt gesenkt. Die Abwurftrommel 55, die mit einem Abstreifer 56 zusammenwirkt, liegt in einem Gehäuseaufsatz 57, so daß die abgeblasenen Bestandteile der Filterkuchen unmittelbar von oben in die Schleuse 51 abgeworfen werden.

Die Unterkonstruktion aus den Stielen 58, 59 auf der Fundamentplatte 60 und dem anschließenden Rahmen 61 mit den aufrechten Stützen 62 und 63 ist in der Darstellung der zweiten Ausführungsform nach Fig. 3 weggelassen; dort sind nur die mit den vier Stielen 62, 63 zusammenwirkenden Füße 64 und 65 gezeigt, welche den Druckbehälter 2 tragen. In dieser Ausführungsform sind die Filterelemente zweiteilig, jedoch sind wiederum zwölf Filter um jeweils 30°, welche der abschnittsweisen Drehung der Scheibe 4 entsprechen, versetzt auf einem Teilkreis um den Drehmittelpunkt 31 in den Haltepunkten der Kreisbewegung angeordnet.

Jedes Filterelement I bis XII (Fig. 3) besteht aus einem Hohlkörperpaar 66, 67 mit allgemein rechteckigem Profil, wobei die Anordnung so getroffen ist, daß die längeren Rechteckseiten 68, 69 im wesentlichen in der radialen Richtung zum Drehmittelpunkt 31 liegen und die kürzeren Rechteckseiten 70, 71 tangential zum Drehkreis verlaufen. Diese Geometrie entsteht durch eine Kastenkonstruktion, in der das Filtrat aus der Filtration anfällt, wobei nur die vorlaufenden Längsseiten 68, 69 der kastenförmigen Hohlkörper mit dem Filtermedium 72, 73 belegt sind. Diese Seiten werden von Lochblechen gebildet, auf denen das Filtertuch als Filtermedium teilweise hohl liegt, so daß das Filtrat durch die Lochungen der Bleche in die Kastenkonstruktion abfließen kann. Die Hohlkörperpaare 66, 67 sind durch einen gemeinsamen Querrohrstutzen 74 miteinander verbunden und führen das Filtrat des nachlaufenden Hohlkörpers 67 in das Abzugsrohr 9, welches aus den beiden Hohlkörpern 66 und 67 das Filtrat abführt.

Das Filtrat fließt in den Filterelementen I - XII stets in Richtung der Steuerscheibe 45 durch eine aus den Zeichnungen nicht ersichtliche Neigung der Filterelemente in Richtung auf den äußeren Gehäusedeckel 40. Die Hohlkörperpaare 66, 67 sind am Ende ihrer Neigung durch den Querrohrstutzen 74 miteinander verbunden, so daß das Filtrat aus dem Hohlkörper 67 in den Hohlkörper 66 übertreten kann und auch dessen Rohrstutzen 9 in die Steuerscheibe gelangt.

Wie sich aus der Darstellung der Fig. 3 ergibt, ist der jeweils vorlaufende Hohlkörper 66 in Drehrichtung nach vorn gegenüber der radialen um den Drehmittelpunkt 31 geneigt, während der nachlaufende Hohlkörper 67 etwa der Radialen folgt, die im Filterelement 1 mit 75 bezeichnet ist. Durch diese Anordnung wird dem unbeabsichtigten Ablösen des Filterkuchens von den austauchenden Filterelementen 9 bis 11 vorgebeugt.

Für die Filterelemente I bis XII der Ausführungsform nach Fig. 3 ist eine Sprühspülstation 128 vorgesehen, in der Düsen 76, 77 den Filterkuchen mit einer Flüssigkeit waschen. Das ist insbesondere für Filterelemente vorgesehen, in denen sich die Filtration auf das Filtrat richtet, wie das z.B. in der Gewinnung der Restsüße bei der Zuckerproduktion der Fall ist, die eingangs erwähnt wurde. Aber auch bei Filtern für die Rauchgaswäsche kann mit Hilfe der Sprühwaschung des Filterkuchens beispielsweise aus diesem der Salzgehalt entfernt werden.

Eine weitere Ausführungsform der Filter bzw. Filterelemente I bis XI zeigt die Fig. 4. In allen Ausführungsformen sind die Filterflächen auf den Längsseiten 78 und 79 der die Filter I bis XII bildenden Filterelemente angeordnet, wie das auch für die Flächen der Filterelemente nach Fig. 1 gilt, die von den längeren Querschnittseiten 32, 33 begrenzt sind, wobei in dieser Ausführungsform auch die Längsseiten mit Filtertuch bespannt sein können, die von den Querschnittsseiten 38 begrenzt sind. Im Ausführungsbeispiel der Fig. 4 handelt es sich wiederum um einteilige Filterelemente, von denen eines dargestellt ist. Dieses mit I bezeichnete Filterelement weist auf jeder seiner Längsseiten 78, 79 einen Spannrahmen 80 auf, der mit seinen Rahmengliedern mit den Längswänden 81, 82 der Kastenkonstruktion verschraubt werden kann. Diese Spannrahmenglieder halten die vier Seiten 81 bis 84 eines Filtertuchabschnittes 85 fest, dessen Seiten 82 und 84 Schnittkanten darstellen, an denen der Abschnitt aus einer Vorratsrolle abgetrennt worden ist, während die Seiten 81 und 83 Web- oder Reißlängskanten der Rolle darstellen. Zwischen den Rahmengliedern des Spannrahmens 80 liegt das Filtertuch wegen der Lochbleche 81 und 82 teilweise hohl.

Da die Seiten 86, 87 des Filterquerschnittes, welche tangential zur Kreisbewegung verlaufen im Vergleich mit den längeren Seiten 78, 79 kurz sind, muß der Druck, welcher auf diesen Seiten beim Filtrieren lastet, in der Kastenkonstruktion durch Queraussteifungen 88, 89 und eine Längsrippe 90 aufgefangen werden.

Die Deckel 91 und 92 der Kastenkonstruktion bilden die Stirnseiten, von denen der Deckel 92 der Drehscheibe 4 zugeordnet ist. Ihn durchdringt ein Rohrstutzen 93, für den in der Drehscheibe 4 (Fig. 5) eine Öffnung 94 vorgesehen ist, in der der Rohrstutzen 93 mit der Drehscheibe 4 formschlüssig wird. Von den drei Stehbolzenaufnahmen 95 bis 97 befinden sich die Aufnahmen 95 und 96 in einer Ohrenlasche 98, die mit dem Deckel 92 verschraubt ist, während die dritte Aufnahme 97 von einem Rohr 99 gebildet wird, das den Hohlkörper der Kastenkonstruktion in Längsrichtung durchsetzt. Eine der Gewindebohrungen 100 für das Gewindeende des Stehbolzens 35 ist in der mittleren Schnittdarstellung der Fig. 5, welche die Drehscheibe 4 wiedergibt, erkennbar.

Wie hieraus außerdem ersichtlich, weist die Drehscheibe 4 für jeden Filter I bis XII einen Radialkanal 101 auf, der in einen Axialkanal 102 mündet, welcher in einem auf der Innenseite 103 einer Steuerscheibe 104 laufenden Zylinderbuchse 105 ausgebildet ist. Die Steuerscheibe 104 weist einen Ringkanal 106 auf, der sich längs eines Teilkreises der Steuerscheibe 4 erstreckt und u. a. während des Filtervorganges das Filtrat der filtrierenden Filter III bis XI aufnimmt. Das Filtrat wird über einen Winkelrohrstutzen 107 in einen Sammelraum 129 zwischen dem Außendeckel 40 und dem Druckbehälterdeckel 4 abgeführt.

Der Ringkanal 106 hat jedoch mehrere Verschlüsse 130 bis 134, die die Mündungen 111, 114, 115, 118 und 119 gegeneinander abschließen. Wie die unterste Darstellung der Fig. 5, welche die Innenseite 108 der Steuerscheibe 104 wiedergibt, erkennen läßt, mündet in den dem Teilkreis 109 folgenden Ringkanal 106 ein weiterer Winkelrohrstutzen 110 bei 111. Dieser Winkelrohrstutzen befindet sich in der Abblasstation und führt den Druckluftstoß aus dem außen auf dem Deckel 40 sitzenden Druckluftbehälter 135 durch den Kanal 101 und den Rohrstutzen 93 in das betreffende Filterelement zum Entfernen des Filterkuchens. Die weiteren Winkelrohrstutzen 112 und 113, für die die Öffnungen 114 und 115 in der Steuerscheibe vorgesehen sind, ermöglichen das getrennte Abziehen des Filtrates mit der aus den Düsen 76, 77 austretenden Flüssigkeit, während andere Winkelrohrstutzen 116 und 117 mit Öffnungen 118 und 119 in der Steuerscheibe in Reserve für andere Zwecke, z.B. für Spülwasser, vorgesehen sind.

## Patentansprüche

1. Druckfilter (1) mit einem Druckbehälter (2), in dem mehrere um vorzugsweise gleiche Bogenwinkel gegeneinander versetzt angeordnete Filter (1 bis 12) um eine Horizontalachse des liegend angeordneten Druckbehälters (2) rotieren und hierbei kontinuierlich in und aus einer Feststoffsuspension (8) ein- und austauchen sowie oberhalb des Feststoffsuspensionsspiegels im Druckraum des Behälters (2) in einer Abblasstation von dem von außen nach innen getrockneten Filterkuchen befreit werden, wobei der abgeblasene Filterkuchen über einen Filterkuchenförderer (12) aus einer Druckschleuse (51) ausgetragen und das Filtrat aus den Filterelementen abgeführt wird, dadurch gekennzeichnet, daß jeder Filter (I bis XII) ein Filterelement bildet, dessen Filterfläche (72, 73; 81, 82) im wesentlichen von radial zur Kreisbahn verlaufenden Querschnittsseiten (32, 33, 68, 69) und parallel zur Drehachse (31) verlaufenden Längsseiten begrenzt ist, wobei die Filterelemente (I bis XII) drehfest auf der Drehscheibe (4) befestigt sind.

2. Druckfilter nach Anspruch 1, daß die Filterelemente (1 bis 12) einen kastenförmigen Hohlkörper (66, 67); 81, 82, 91, 92) aufweisen, der das aufgespannte, flexible und teilweise hohlliegende Filtermedium (10; 72, 73; 85) unterstützt und auf einer die Rotationsbewegung vermitteltenden Drehscheibe (4) drehfest gelagert ist.

3. Druckfilter nach einem der Ansprüche 1 oder 2, dadurch gekennzeichnet, daß die gegenüber der Drehscheibe (4) angeordnete Druckbehälterwand (18) eine Montageöffnung (58) für die Filterelemente (I bis XII) aufweist, die mit Stehbolzen (35 bis 37) auf der Drehscheibe (4) befestigt und durch einen von der Drehscheibe (4) abziehbaren Rohrstutzen (93) festgelegt sind, der zum Abführen des Filtrates dient.

4. Druckfilter nach einem der Ansprüche 1 bis 3, dadurch gekennzeichnet, daß die Filterelemente (I bis XII) ein durch eine gemeinsame Filtratabführung verbundenes Hohlkörperpaar (66, 67) aufweisen, dessen in Drehrichtung vorlaufende Flächen (72, 73) als Filterflächen dienen, wobei die Filterflächen (72, 73) der Hohlkörperpaare (66, 67) einen rechteckigen Umriß aufweisen und der vorlaufende Hohlkörper (66) jedes Paares in Drehrichtung nach vorn gegen die vom Drehpunkt ausgehende Radiale (75) geneigt ist, während der nachlaufende Hohlkörper (67) mit seiner radialen Hauptebene in der Radialen (75) angeordnet ist.

5. Druckfilter nach einem der Ansprüche 1 bis 3, dadurch gekennzeichnet, daß die Umrißlinie (35, 33, 51) des Querschnittes der Filter (1 bis 12) in Richtung auf den Drehmittelpunkt der Drehscheibe (4) konvergiert und daß der Filtratabzug (9) im Scheitel der konvergierenden Teilstrecken (32, 33) der Umrißlinie angeordnet ist, wobei die konvergierenden Teilstrecken (32, 33) der Umrißlinien der Querschnitte der Filter (1 bis 12) jeweils durch einen Bogen (33a) verbunden sind, der den als Rohr ausgebildeten Filtratabzug (9) teilweise umhüllt und die dem Drehmittelpunkt der Drehscheibe (4) abgewandten Enden der konvergierenden Teilstrecken (32, 33) der Umrißlinien der Filterkerzenquerschnitte durch eine Gerade (51) oder durch eine dachförmige Abschrägung (34, 35) miteinander verbunden sind.

6. Druckfilter nach einem der Ansprüche 1 bis 5, dadurch gekennzeichnet, daß zwischen den Positionen benachbarter Filter in Drehrichtung hinter der Abblasstation (12) eine Spülstation (14) für das Filtermedium angeordnet ist.

7. Druckfilter nach Anspruch 10, dadurch gekennzeichnet, daß die Spülstation (14) eine Rohrlanze (15) mit Austragsdüse (26) für das Spülmedium aufweist und der Rohrlanze (15) ein Antrieb (22) zugeordnet ist, der die längs der Filterfläche der benachbarten Filterelemente (I, II) führt.

8. Druckfilter nach einem der Ansprüche 6 oder 7, dadurch gekennzeichnet, daß die Spülstation zum pre-coating des Filtermediums dient.

9. Druckfilter nach einem der Ansprüche 1 bis 11, dadurch gekennzeichnet, daß den Filterflächen je ein Spannrahmen (80) zugeordnet ist, der zum Aufspannen eines Filtertuchabschnittes (75) dient, wobei ein Paar gegenüberliegender Seiten (82, 84) des Filtertuches Schnittkanten darstellen, an denen der Abschnitt (85) aus einem Filtertuchvorrat abgetrennt ist, während die dazu senkrechten Seiten (81, 83) Reißlängskanten des aufgerollten Filtertuches darstellen.

10. Druckfilter nach einem der Ansprüche 1 bis 9, dadurch gekennzeichnet, daß die Filterelemente (I bis XII) frei auskragend an der zum Druckraum gerichteten Seite der Drehscheibe (5) befestigt und über den Rohrstutzen (93), einen in der Drehscheibe (4) ausgebildeten Radialkanal (101) mit einem Kreiskanal (106) einer drehfesten Steuerscheibe (104) verbunden sind, aus dem das Filtrat abgeführt wird, wobei der Kreiskanal (106) Verschlüsse (130 bis 134) aufweist, die Zuführungen und Abführungen (110, 112, 113, 116, 117) mindestens für Steuerdruckluft und Spülflüssigkeit gegeneinander abschließen.

11. Druckfilter nach einem der Ansprüche 1 bis 10, dadurch gekennzeichnet, daß die Drehscheibe (4) mit ihrem auf einem Schlußring (120) ausgebildetem Umfang auf einer in einem ringförmigen Sitz des Druckbehälterflansches (123) untergebrachen Ringdichtung (125) abgedichtet ist, wobei der Sitz nach Demontage des äußeren Deckelflansches (122) zugänglich ist.

12. Druckfilter nach einem der Ansprüche 1 bis 11, dadurch gekennzeichnet, daß der äußere Gehäusedeckel (40) eine Öffnung (127) aufweist, aus der die mit dem Deckel (126) der Öffnung (127) verbundene Steuerscheibe (104) abziehbar ist.

13. Druckbehälter nach einem der Ansprüche 1 bis 12, dadurch gekennzeichnet, daß für die austauschenden Filter (X, XI) eine Sprühwaschung des Filterkuchens vor der Abblasstation (12) vorgesehen ist.
